# EUROPEAN PATENT SPECIFICATION

(11) **EP 1 757 868 B1**
(45) Date of publication and mention of the grant of the patent: **31.03.2010**
(21) Application number: 06254206.3
(22) Date of filing: 10.08.2006
(51) Int. Cl.: F24D 11/00, F24D 19/10, F24D 3/08

(54) **Electric combination boiler**
Elektrischer Kombinationsboiler
Chaudière mixte et électrique

(30) Priority: 13.08.2005 GB 0516678
(43) Date of publication of application: 28.02.2007
(73) Proprietor: Curtis, George, Cumbernauld Glasgow G67 4RA (GB)
(72) Inventor: Curtis, George, Cumbernauld Glasgow G67 4RA (GB)
(74) Representative: Murnane, Graham John

(56) References cited:
- EP-A- 0 675 326
- EP-A1- 0 984 226
- GB-A- 2 266 762
- GB-A- 2 423 569

## Description

The present invention is directed to an electric combination boiler particularly, though not exclusively, for use in domestic heating systems.

An electric combination boiler according to the preamble of claim 1 is known from document GB 2 423 569.

Conventional electric combination boilers are designed to heat and supply water to both a central heating circuit and hot water taps. Often, the boilers are required to heat and supply water to both the heating circuit and the taps at the same time, if hot water is demanded whilst the central heating is operating. In such circumstances, conventional combination boilers can struggle to supply hot water to the taps at a suitably high flow rate.

In the conventional combination boilers, a plate heat exchanger is used in order to heat the mains water on its way to the taps. The heat exchanger receives water from the storage tank of the central heating circuit and transfers some of the heat from the central heating water to the mains water supply as it passes through the heat exchanger. As there is a large temperature difference between the central heating water, e.g. 80 degrees Celsius, and the mains supply water, e.g. 5 degrees Celsius, heat transfer through the heat exchanger is not as efficient as it would be if the temperature difference across the heat exchanger was smaller.

Examples of prior art combination boilers are described in EP 0 675 326 and EP 0 984 226.

It is an aim of the present invention to obviate or mitigate one or more of these disadvantages.

According to a first aspect of the present invention, there is provided an electric combination boiler comprising:
a water tank, the tank having at least one electrical heating element therein;
a first heat exchanger having a heat input side and a heat output side;
a first heat exchange circuit fluidly connecting the heat input side of the first heat exchanger with the tank;
a first water pump adapted to circulate water from the tank through the first heat exchange circuit; and
a hot water supply pipe having one end adapted to be connected to a mains water supply and the other end connected to the heat output side of the first heat exchanger;
wherein the heat output side of the first heat exchanger is adapted to connect the hot water supply pipe to a hot water outlet, and at least a portion of the hot water supply pipe passes through the interior of the tank.

Preferably, the portion of the hot water supply pipe passing through the interior of the tank is at least partially in the form of a coil.

Preferably, the boiler further comprises a flow switch located in the hot water supply pipe, the flow switch adapted to control the operation of the first water pump.

Preferably, the boiler further comprises at least one first thermostat located adjacent the at least one heating element, the first thermostat adapted to control the operation of the heating element. Most preferably, the boiler comprises a plurality of heating elements, and each heating element has a dedicated first thermostat adjacent thereto.

Preferably, the tank is adapted to be fluidly connected to both ends of a circulatory central heating circuit, and the boiler further comprises a second water pump adapted to circulate water from the tank through the central heating circuit.

Preferably, the boiler further comprises a second thermostat adapted to control the operation of the second water pump. The second thermostat is located in the tank adjacent the hot water supply pipe.

Preferably, the boiler further comprises a mains water bypass pipe adapted to connect the mains supply directly to the hot water outlet, and an adjustable mixer valve adapted to connect both the heat output side of the first heat exchanger and the bypass pipe with the hot water outlet.

Preferably, the bypass pipe includes a filler line fluidly connected to the tank, the filler line including a filler valve adapted to selectively allow mains water into the tank.

Preferably, the boiler further comprises:
a second heat exchanger having a heat input side and a heat output side;
a second heat exchange circuit fluidly connecting the heat output side of the second heat exchanger with the tank;
a third heat exchange circuit fluidly connecting the heat input side of the second heat exchanger in a closed loop; and
an auxiliary heating source adapted to heat water in the third heat exchange circuit.

Preferably, the auxiliary heating source is solar powered.

According to a second aspect of the present invention, there is provided a central heating and hot water system comprising an electric combination boiler according to the first aspect of the present invention, and a circulatory central heating system having at least one radiator thereon.

A preferred embodiment of the present invention will now be described, by way of example only, with reference to the accompanying drawing, in which:
Figure 1 shows a schematic view of an electrical combination boiler;
Figure 2 shows a wiring diagram of the heating control circuit of the boiler of Figure 1; and
Figure 3 shows a wiring diagram of the flow control circuit used with the boiler of Figure 1.

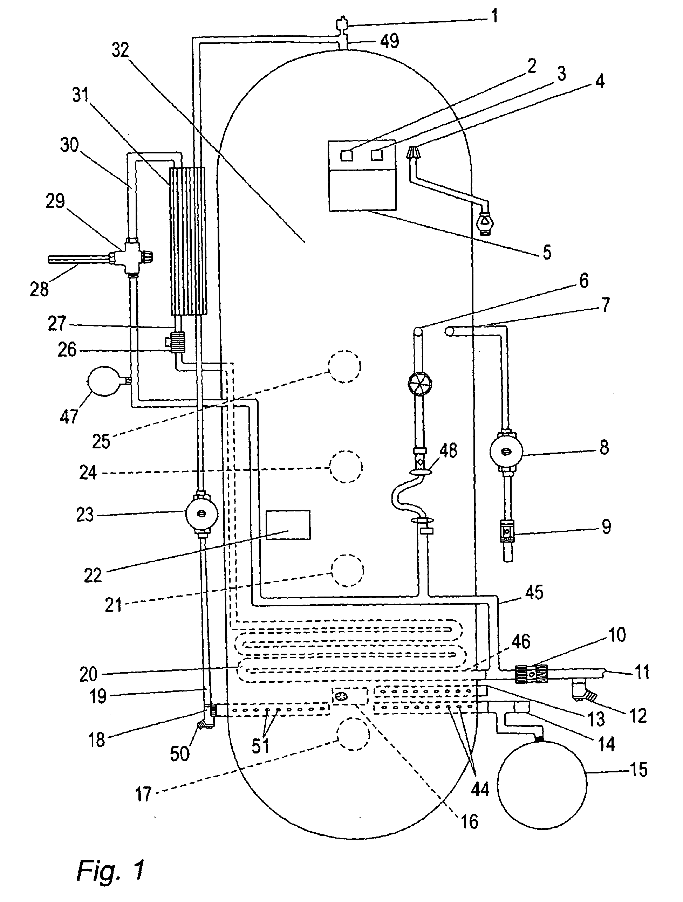

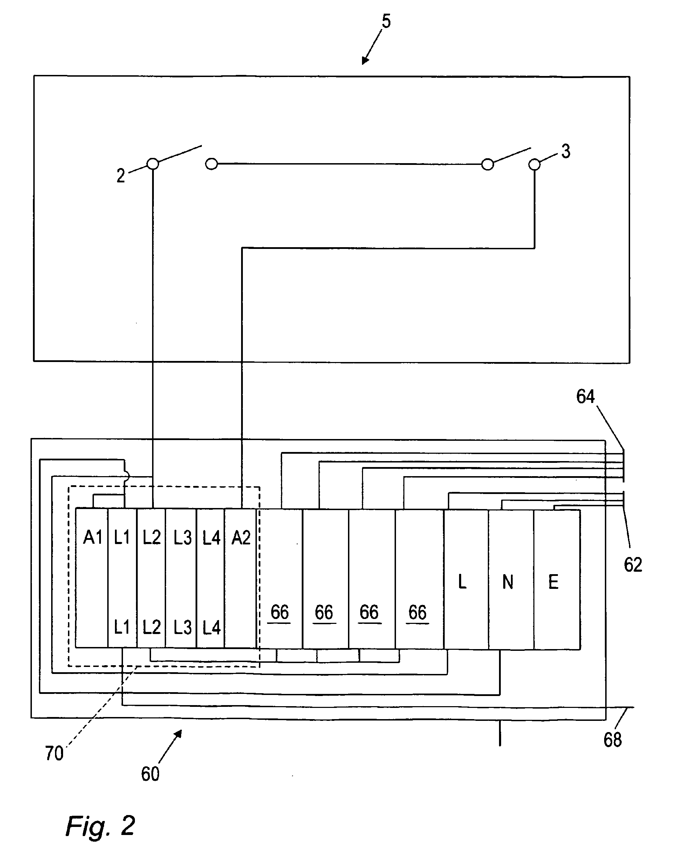

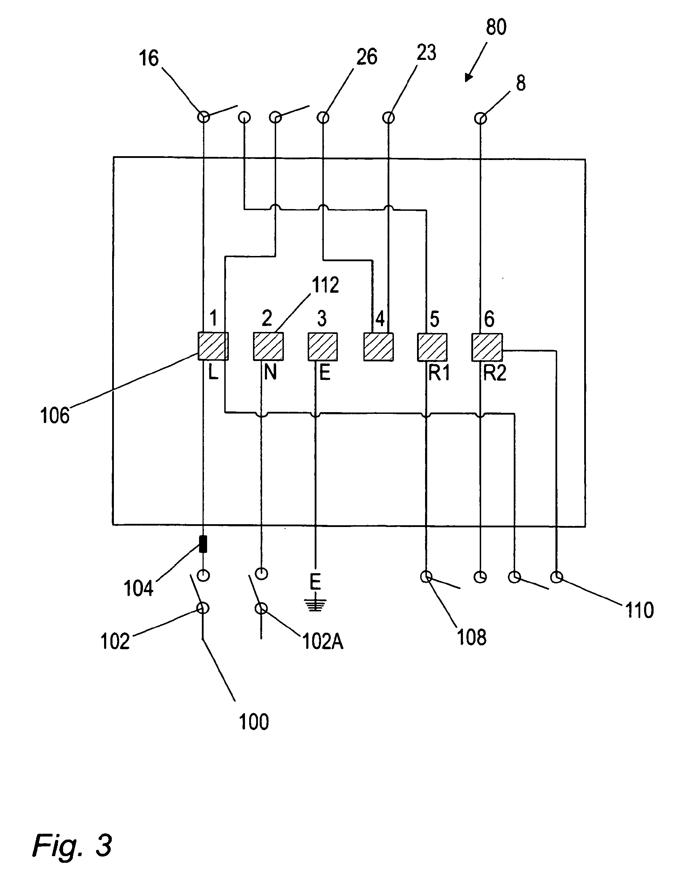

Figure 1 shows an electrical combination boiler according to the present invention. The boiler comprises a generally cylindrical tank 32 in which at least one electrical heating element Is located. In the illustrated embodiment, four heating elements 17,21,24,25 are provided. The or each heating element 17,21,24,25 is provided with a dedicated first thermostat (not shown) lying adjacent thereto and adapted to control the heating element 17,21,24,25 in a conventional manner. The boiler includes a number of switches to ensure its safe operation. The first of these switches is a low pressure switch 2 which monitors the pressure within the tank 32. If the pressure drops below a predetermined value, the switch 2 will open in order to cut off power to the heating elements 17,21,24,25. The second sensor is a high temperature switch 3 which monitors the temperature within the tank 32. If the water temperature rises above a predetermined level, the switch 3 will open, again cutting power to the heating elements 17,21,24,25. A pressure relief valve 4 is also provided to ensure the pressure in the tank does not rise above a predetermined level. These safety components are housed in a first section of a wiring enclosure 5, which also houses a heating control circuit 60 in a second section. A second enclosure 22 is also provided on the boiler to house the flow control circuit Both the heating and flow control circuits will be described in more detail below with reference to Figures 2 and 3.

Preferably, the boiler has a first outlet pipe 7 through which water heated by the elements 17,21,24,25 in the tank 32 flows to a central heating circuit (not shown) incorporating one or more radiators. To control the flow to the central heating circuit, the boiler can be provided with a central heating pump 8 and a one-way valve 9 on the first outlet pipe 7. When the water returns from the central heating circuit it re-enters the tank 32 via a first inlet pipe 14. The end of the inlet pipe 14 is located in the tank 32 and includes a number of apertures 44 through which the water flows back into the bottom of the tank 32. In the preferred embodiment illustrated, the inlet pipe 14 is provided with an expansion vessel 15 to regulate pressure and volume of water within the heating circuit. A further inlet pipe 13 can be provided for connecting the boiler with another flow circuit, depending on the application.

The boiler also includes a second thermostat 16 which is located towards the bottom of the tank 32, adjacent the first inlet pipe 14. This thermostat 16 monitors the temperature of the water in the tank 32 and is connected to the boiler control circuit. Via the boiler control circuit, the second thermostat 16 controls the operation of the central heating pump 8, as will be explained below.

Mains water enters the boiler via a mains water inlet pipe, hereinafter referred to as the second inlet pipe 11. The second inlet pipe 11 has a drain 12 and a one-way valve 10. The second inlet pipe 11 divides into a hot water supply pipe 46 and a bypass pipe 45. The bypass pipe 45 lies outside the tank 32 and passes directly to an adjustable three-way mixer valve 29 whose operation will be described in more detail below. The bypass pipe 45 also includes a second expansion vessel 47 to regulate pressure and volume of water in the bypass pipe 45. The bypass pipe 45 also supplies mains water to fill the tank 32 via filler line 6. Filler line 6 has at least one manually operated filler valve 48 which is in a closed position during normal operation of the boiler. However, if the tank 32 requires water, the valve 48 can be opened and mains water will flow into the tank 32 through the filler line 6. The filler valve 48 can then be closed again once the desired water pressure has been reached within the tank 32.

At least a portion of the hot water supply pipe 46 passes through the interior of the tank 32. The portion of the hot water supply pipe 46 within the tank 32 is at least partially formed in a coil 20 adjacent the bottom of the tank 32. After the coil 20, the hot water supply pipe 46 passes back outside the tank 32 and through the heat output side of a plate heat exchanger 31 before arriving at the three-way mixer valve 29 via a connecting pipe 30. A flow switch 26 is provided on the hot water supply pipe 46 to control the flow of water therethrough.

The heat exchanger 31 is provided to heat the mains water passing through the hot water supply pipe 46 so that the water is hot when it arrives at the hot water outlet. Heat is supplied to the heat input side of the heat exchanger 31 via a heat exchange circuit 19 from the tank 32. Hot water enters the circuit 19 from the tank 32 via a hot water outlet 49 at the top of the tank 32. An auto air eliminator 1 is provided on the circuit 19 adjacent the hot water outlet 49 to automatically remove any air from the circuit 19. The hot water then flows through the heat input side of the heat exchanger 31, transferring heat to the heat output side and the mains water flowing through the hot water supply pipe 46. A pump 23 controls the flow of hot water around the circuit 19 via the flowswitch 26.

The hot water re-enters the tank 32 from the circuit 19 via a hot water inlet pipe, hereinafter referred to as the third inlet pipe 18. The end of the third inlet pipe 18 located in the tank 32 has a number of apertures 51 through which the water flows into the tank 32. If desired, the inlet pipe 18 may be curved downwards so that the end of the pipe 18 is adjacent the bottom of the tank 32. The third inlet pipe 18 also has a drain 50 for removing water from the circuit 19, when desired.

The boiler operates via two separate mains 230V power supplies: one power supply for the heating control circuit and another power supply for the flow control circuit. The power supply for the flow control circuit is a 24 hour power supply. The power supply for the heating control circuit may also be a 24 hour supply, but could also operate on an interruptible (off-peak) power supply where such a supply is made available by an electricity provider. Figures 2 and 3 show preferred embodiments of the wiring circuits for the heating and flow control, respectively, of the boiler.

Referring to Figure 2, the contents of the wiring enclosure 5 are illustrated. A heating control circuit, generally designated 60, is housed within a first section of the enclosure 5. The heating control circuit 60 has live, neutral and earth terminals L,N,E which are connected to a mains supply 62. Between the mains supply and the live, neutral and earth terminals L,N,E are a double pole mini circuit breaker (not shown) and a double pole isolator (not shown) which protect the circuit against power surges.

The live and neutral terminals L,N are wired to a 12kW contactor switch, generally designated 70. The contactor switch 70 is an electromagnetic switch which controls the connection of the mains power to the heating control circuit 60. The contactor switch 70 comprises a sliding contactor member located in a coil (neither shown). Power is supplied to the heating elements when the contactor switch 70 is energised, ie. current is passed through the coil, and power is shut off when the current to the coil is stopped. The contactor switch 70 comprises a neutral coil connector A1 and a live coil connector A2 which are connected between either end of the coil and the neutral and live terminals N,L, respectively. The contactor switch 70 further comprises a contactor neutral terminal L1 and a contactor live terminal L2 which are also connected to the respective neutral and live terminals N,L. When power is supplied and the coil is energised, current flows across the contactor switch. However, when the power is shut down and the coil is de-energised, no current will flow across the contactor switch. Live coil connector A2 is also connected to the contactor live terminal L2 via low pressure switch 2 and high temperature switch 3. Thus, if either switch 2,3 opens, current is no longer supplied to the coil and the contactor switch 70 will open, thereby shutting off power to the heating elements.

Contactor live terminal L2 connects the live terminal L with the heating elements in the boiler tank via four heating element live connections, generally designated 64. Each connection 64 includes a 16A mini circuit breaker 66 to protect the elements against power surge. Contactor neutral terminal L1 is connected to the heating elements via a heating element neutral connection 68.

Figure 3 illustrates the wiring circuit of the flow control circuit, generally designated 80. The flow control circuit is connected to a separate 230V 50Hz mains power supply 100 than that which supplies the heat control circuit shown in Figure 2. The power supply 100 is connected to a live terminal 106 by an isolator switch 102 and a 3A fuse 104. The isolator switch 102 allows power to the flow circuit 80 to be manually switched on and off. The isolator switch 102 is a double pole isolator which also has a neutral switch 102A connected to the neutral terminal 112 of the circuit. The live terminal 106 is also connected to a first external heating control terminal R1 via the second thermostat 16. The first external heating control terminal R1 is connected to a second external heating control terminal R2 across an external heating control unit, represented by switch 108, which can include an automatic timer, manual controls and similar features found on conventional control units. The second external heating control terminal R2 is connected to the central heating pump 8.
Optionally, the second external heating control terminal R2 may also be connected to the live terminal 106 via a conventional frost thermostat 110.

As well as the central heating pump 8, the live terminal 106 is also connected to the heat exchange circuit pump 23 via flow switch 26.

The operation of the boiler will now be described. In normal operation, the boiler will be providing hot water for the central heating system in a generally conventional manner. That is to say, the heating elements 17,21,24,25 heat the water in the tank 32, and this water is pumped to the heating system via outlet pipe 7 and the pump 8. The respective thermostats of the heating elements 17,21,24,25 monitor the temperature of the water in the tank and allow power to the elements when the water drops below a predetermined temperature. The water returns from the system into the bottom of the tank 32 via return pipe 14.

When a hot water tap is turned on, water begins to flow through the hot water outlet 28, the connecting pipe 30 and the hot water supply pipe 46. As water begins to flow in the hot water supply pipe 46, the flow switch 26 closes and power is supplied to the heat exchange circuit pump 23. The pump 23 draws hot water into the heat exchange circuit 19 from the tank 32.

As the mains water enters the tank 32 in the hot water supply pipe 46, it passes through the coil 20 in the bottom of the tank 32. Passing through the coil 20 allows the mains water to receive heat from the water held in the tank, thereby raising the temperature of the mains water as it passes through the second branch 46. Because the water in the tank is at a relatively constant temperature, there is no delay in transferring heat to the mains water in the coil 20. Further heat is then transferred to the water in the second branch 46 as it passes through the plate heat exchanger 31. The mains water therefore receives heat from the hot water in the tank 32 at two different points on its journey from the second inlet pipe 11 to the hot water outlet 28.

Due to the heat exchange via the coil 20, the water at the bottom of the tank 32 will become cooler. The second thermostat 16 is constantly monitoring the temperature of the water in the tank 32 adjacent the coil 20. If the temperature of the water in the tank drops below a predetermined level and the central heating is in operation, the thermostat 16 will open, thereby cutting the power to the central heating pump 8. As a result, the water heated in the tank 32 is retained in the tank 32 and heat exchange loop 19 instead of being pumped off to the central heating system. Therefore, all of the heat energy created by the elements 17,21,24,25 in the tank 32 is directed to heating the mains supply water on the way to the taps. Once the temperature in the tank 32 reaches the desired level again, the thermostat 16 will close once again, thereby re-starting the central heating pump and allowing the water in the tank 32 to be pumped off to the central heating system. The process of the central heating pump off and on will continue each time the water temperature adjacent the coil 20 drops below the predetermined level. Once the tap has been closed, the flow switch 26 will open and the pump 23 will shut down.

A thermostat or temperature sensor is located in the three-way mixer valve 29. The sensor monitors the temperature of the hot water flowing to the tap. If the temperature is too high, more mains water can be introduced to the outlet pipe 28 from the bypass pipe 45 by adjusting the three-way valve 29. The valve 29 is calibrated in a conventional manner to allow this adjustment. In this way, hot water at the ideal temperature can be obtained from a hot water tap, without any danger of scalding. In addition, the valve 29 has a safety shut off that will simply close the valve if the temperature of the water reaches a dangerous level, e.g over 60 degrees Celsius.

By transferring heat from the stored central heating water to the incoming mains water at two separate points, the heat transfer rate to the mains water is improved with the present invention. In addition, by first transferring heat to the mains water in a portion of the supply pipe which passes through the tank, the temperature difference between the water on the heat input and heat output sides of the plate heat exchanger is reduced. This results in an improved heat transfer across the plate heat exchanger. By only allowing water to be supplied to the central heating circuit when the stored water is at an ideal temperature, the boiler of the present invention does not have to divide its heat energy between the hot water and central heating water supplies at the same time. By shutting down the central heating pump when hot water is demanded, the temperature and volume of the hot tap water is improved over conventional combination boilers. Even if a hot water tap is run for 30 minutes, for example, shutting down the central heating for this period of time only results in a temperature drop of around 9-2°C. Such a drop in temperature would be barely noticeable. Furthermore, by locating the second thermostat in the tank adjacent the mains supply pipe, the boiler can more quickly react to counteract a drop in temperature caused by the heat transfer to the mains water.

Although the preferred embodiment of the invention has been described as preferably incorporating a pump for circulating water in a central heating system, it should be understood that the boiler of the present invention may be connected to an existing pump on an existing central heating circuit. Therefore, the boiler need only comprise the central heating pump, or second water pump, when such a pump is not already provided on the central heating circuit.

Furthermore, the control unit could include a display means which displays operational information relating to the boiler including, for example, operational status and fault diagnosis indicators.

The boiler can also be adapted to receive water heated by an auxiliary heat source if desired. In such a case, the water tank is fitted with an additional water outlet, which is preferably a branch duct taken from the central heating return pipe. This branch forms part of a second heat exchange circuit which allows water to pass through the branch duct and the heat output side of a second plate heat exchanger before returning into the tank via a further water inlet. The heat input side of the second plate heat exchanger receives water from a third heat exchange circuit formed as a closed loop. The water in the third heat exchange circuit is heated by the auxiliary heat source. This auxiliary heat source may be of various types, but is preferably a solar power source. A pump is provided on the third heat exchange circuit to pump water around the loop. A further pump is provided on the second heat exchange circuit to pump water through the heat output side of the second heat exchanger and back to the tank. An additional water temperature sensor is also provided on the tank. Via this sensor, the pumps on the auxiliary heat circuit of the apparatus can be controlled to supply water heated by the auxiliary heat source when the water temperature in the tank is below a predetermined value. In this manner, the water in the tank can be pre-heated by the auxiliary heat source before the main heating elements are powered up. This will reduce the amount of energy consumed by the boiler, particularly if the auxiliary heat source is solar powered.

These and other modifications and improvements may be incorporated without departing from the scope of the invention.

## Claims

1. An electric combination boiler comprising:
a water tank (32), the tank (32) having at least one electrical heating element (17) therein;
a first heat exchanger (31) having a heat input side and a heat output side:
a first heat exchange circuit (19) fluidly connecting the heat input side of the first heat exchanger (31) with the tank (32);
a first water pump (23) adapted to circulate water from the tank (32) through the first heat exchange circuit (19); and
a hot water supply pipe (46) having one end adapted to be connected to a mains water supply and the other end connected to the heat output side of the first heat exchanger (31);
wherein the heat output side of the first heat exchanger (31) is adapted to connect the hot water supply pipe (46) to a hot water outlet (28), **characterised in that**, at least a portion of the hot water supply pipe (46) passes through the interior of the tank (32).

2. The boiler of Claim 1, wherein the portion of the hot water supply pipe (46) passing through the interior of the tank (32) is at least partially in the form of a coil (20).

3. The boiler of either preceding claim, further comprising a flow switch (26) located in the hot water supply pipe (46), the flow switch (26) adapted to control the operation of the first water pump (23).

4. The boiler of any preceding claim, further comprising at least one first thermostat located adjacent the at least one heating element (17), the first thermostat adapted to control the operation of the heating element (17).

5. The boiler of Claim 4, wherein the boiler comprises a plurality of heating elements (17,21,24,25), and each heating element (17,21,24,25) has a dedicated first thermostat adjacent thereto.

6. The boiler of either Claim 4 or Claim 5, wherein the tank (32) is adapted to be fluidly connected to both ends of a circulatory central heating circuit, and the boiler further comprises a second water pump (8) adapted to circulate water from the tank (32) through the central heating circuit.

7. The boiler of Claim 6, further comprising a second thermostat (16) adapted to control the operation of the second water pump (8).

8. The boiler of Claim 7, wherein the second thermostat (16) is located in the tank (32) adjacent the hot water supply pipe (46).

9. The boiler of any preceding claim, further comprising a mains water bypass pipe (45) adapted to connect the mains supply directly to the hot water outlet (28), and an adjustable mixer valve (29) adapted to connect both the heat output side of the first heat exchanger (31) and the bypass pipe (45) with the hot water outlet (28).

10. The boiler of Claim 9, wherein the bypass pipe (45) includes a filler line (6) fluidly connected to the tank (32), the filler line (6) including a filler valve (48) adapted to selectively allow mains water into the tank (32).

11. The boiler of any preceding claim, further comprising:
a second heat exchanger having a heat input side and a heat output side;
a second heat exchange circuit fluidly connecting the heat output side of the second heat exchanger with the tank (32);
a third heat exchange circuit fluidly connecting the heat input side of the second heat exchanger in a closed loop; and
an auxiliary heating source adapted to heat water in the third heat exchange circuit.

12. The boiler of Claim 11, wherein the auxiliary heating source is solar powered.

13. A central heating and hot water system comprising an electric combination boiler according to any of Claims 1 to 12, and a circulatory central heating system having at least one radiator thereon.

## Patentansprüche

1. Ein elektrischer Kombiboiler, der Folgendes beinhaltet:
einen Wassertank (32), wobei der Tank (32) mindestens ein elektrisches Heizelement (17) darin aufweist;
einen ersten Wärmeaustauscher (31) mit einer Wärmezufuhrseite und einer Wärmeabgabeseite;
einen ersten Wärmeaustauschkreislauf (19), der die Wärmezufuhrseite des ersten Wärmeaustauschers (31) mit dem Tank (32) fluidisch verbindet;
eine erste Wasserpumpe (23), die angepasst ist, um Wasser aus dem Tank (32) durch den ersten Wärmeaustauschkreislauf (19) zu zirkulieren; und
ein Warmwasseranschlussrohr (46), dessen eines Ende angepasst ist, um mit einem Leitungswasseranschluss verbunden zu sein, und dessen anderes Ende mit der Wärmeabgabeseite des ersten Wärmeaustauschers (31) verbunden ist;
wobei die Wärmeabgabeseite des ersten Wärmeaustauschers (31) angepasst ist, um das Warmwasseranschlussrohr (46) mit einem Warmwasserauslass (28) zu verbinden, **dadurch gekennzeichnet, dass** mindestens ein Abschnitt des Warmwasseranschlussrohrs (46) durch das Innere des Tanks (32) geht.

2. Boiler gemäß Anspruch 1, wobei der Abschnitt des Warmwasseranschlussrohrs (46), der durch das Innere des Tanks (32) geht, mindestens teilweise in der Form einer Rohrschlange (20) vorliegt.

3. Boiler gemäß einem der vorhergehenden Ansprüche, der ferner einen Strömungsschalter (26) beinhaltet, welcher in dem Warmwasseranschlussrohr (46) angeordnet ist, wobei der Strömungsschalter (26) angepasst ist, um den Betrieb der ersten Wasserpumpe (23) zu steuern.

4. Boiler gemäß einem der vorhergehenden Ansprüche, der ferner mindestens einen ersten Thermostat beinhaltet, welcher neben dem mindestens einen Heizelement (17) angeordnet ist, wobei der erste Thermostat angepasst ist, um den Betrieb des Heizelements (17) zu steuern.

5. Boiler gemäß Anspruch 4, wobei der Boiler eine Vielzahl von Heizelementen (17, 21, 24, 25) beinhaltet und jedes Heizelement (17, 21, 24, 25) neben sich einen zugehörigen ersten Thermostat aufweist.

6. Boiler gemäß entweder Anspruch 4 oder Anspruch 5, wobei der Tank (32) angepasst ist, um mit beiden Enden eines Kreislaufs einer Umlaufzentralheizung fluidisch verbunden zu sein, und der Boiler ferner eine zweite Wasserpumpe (8) beinhaltet, die angepasst ist, um Wasser aus dem Tank (32) durch den Kreislauf der Zentralheizung zu zirkulieren.

7. Boiler gemäß Anspruch 6, der ferner einen zweiten Thermostat (16) beinhaltet, welcher angepasst ist, um den Betrieb der zweiten Wasserpumpe (8) zu steuern.

8. Boiler gemäß Anspruch 7, wobei der zweite Thermostat (16) in dem Tank (32) neben dem Warmwasseranschlussrohr (46) angeordnet ist.

9. Boiler gemäß einem der vorhergehenden Ansprüche, der ferner ein Leitungswasserumgehungsrohr (45), das angepasst ist, um den Hauptanschluss direkt mit dem Warmwasserauslass (28) zu verbinden, und ein einstellbares Mischventil (29), das angepasst ist, um sowohl die Wärmeabgabeseite des ersten Wärmeaustauschers (31) als auch das Umgehungsrohr (45) mit dem Warmwasserauslass (28) zu verbinden, beinhaltet.

10. Boiler gemäß Anspruch 9, wobei das Umgehungsrohr (45) eine Füllerleitung (6) umfasst, die mit dem Tank (32) fluidisch verbunden ist, wobei die Füllerleitung (6) ein Füllventil (48) umfasst, das angepasst ist, um Leitungswasser selektiv in den Tank (32) zu lassen.

11. Boiler gemäß einem der vorhergehenden Ansprüche, der ferner Folgendes beinhaltet:
einen zweiten Wärmeaustauscher mit einer Wärmezufuhrseite und einer Wärmeabgabeseite;
einen zweiten Wärmeaustauschkreislauf, der die Wärmeabgabeseite des zweiten Wärmeaustauschers mit dem Tank (32) fluidisch verbindet;
einen dritten Wärmeaustauschkreislauf, der die Wärmezufuhrseite des zweiten Wärmeaustauschers in einem geschlossenen Kreis fluidisch verbindet; und
eine Hilfsheizquelle, die angepasst ist, um Wasser in dem dritten Wärmeaustauschkreislauf zu erhitzen.

12. Boiler gemäß Anspruch 11, wobei die Hilfsheizquelle solarbetrieben ist.

13. Ein Zentralheizungs- und Warmwassersystem, das einen elektrischen Kombiboiler gemäß einem der Ansprüche 1 bis 12 und ein System einer Umlaufzentralheizung mit mindestens einem Heizkörper daran beinhaltet.

## Revendications

1. Une chaudière semi-tubulaire électrique comprenant :
un réservoir d'eau (32), réservoir (32) dans lequel se trouve au moins un élément chauffant électrique (17) ;
un premier échangeur de chaleur (31) présentant un côté entrée de chaleur et un côté sortie de chaleur ;
un premier circuit d'échange de chaleur (19) raccordant par fluide le côté entrée de chaleur du premier échangeur de chaleur (31) au réservoir (32) ;
une première pompe à eau (23) adaptée pour faire circuler de l'eau depuis le réservoir (32) à travers le premier circuit d'échange de chaleur (19) ; et
un tuyau d'alimentation en eau chaude (46) dont une extrémité est adaptée pour être raccordée à une alimentation en eau de canalisation principale et l'autre extrémité pour être raccordée au côté sortie de chaleur du premier échangeur de chaleur (31);
où le côté sortie de chaleur du premier échangeur de chaleur (31) est adapté pour raccorder le tuyau d'alimentation en eau chaude (46) à une évacuation d'eau chaude (28), **caractérisée en ce qu'**au moins une portion du tuyau d'alimentation en eau chaude (46) passe à l'intérieur du réservoir (32).

2. La chaudière de la revendication 1, où la portion du tuyau d'alimentation en eau chaude (46) passant à travers l'intérieur du réservoir (32) est au moins en partie en forme de serpentin (20).

3. La chaudière de l'une ou l'autre revendication précédente, comprenant en outre un régulateur de flux (26) situé dans le tuyau d'alimentation en eau chaude (46), le régulateur de flux (26) étant adapté pour contrôler le fonctionnement de la première pompe à eau (23).

4. La chaudière de n'importe quelle revendication précédente, comprenant en outre au moins un premier thermostat situé adjacent à cet au moins un élément chauffant (17), le premier thermostat étant adapté pour contrôler le fonctionnement de l'élément chauffant (17).

5. La chaudière de la revendication 4, où la chaudière comprend une pluralité d'éléments chauffants (17, 21, 24, 25), et adjacent à chaque élément chauffant (17, 21, 24, 25) se trouve un premier thermostat dédié.

6. La chaudière soit de la revendication 4, soit de la revendication 5, où le réservoir (32) est adapté pour être raccordé par fluide aux deux extrémités d'un circuit de chauffage central circulatoire, et la chaudière comprend en outre une deuxième pompe à eau (8) adaptée pour faire circuler de l'eau depuis le réservoir (32) à travers le circuit de chauffage central.

7. La chaudière de la revendication 6, comprenant en outre un deuxième thermostat (16) adapté pour contrôler le fonctionnement de la deuxième pompe à eau (8).

8. La chaudière de la revendication 7, où le deuxième thermostat (16) est situé dans le réservoir (32) adjacent au tuyau d'alimentation en eau chaude (46).

9. La chaudière de n'importe quelle revendication précédente, comprenant en outre un tuyau de dérivation d'eau de canalisation principale (45) adapté pour raccorder l'alimentation de canalisation principale directement à l'évacuation d'eau chaude (28), et une vanne mélangeuse réglable (29) adaptée pour raccorder à la fois le côté sortie de chaleur du premier échangeur de chaleur (31) et le tuyau de dérivation (45) à l'évacuation d'eau chaude (28).

10. La chaudière de la revendication 9, où le tuyau de dérivation (45) inclut une conduite de remplissage (6) raccordée par fluide au réservoir (32), la conduite de remplissage (6) incluant une soupape de remplissage (48) adaptée pour laisser entrer de façon sélective de l'eau de canalisation principale dans le réservoir (32).

11. La chaudière de n'importe quelle revendication précédente, comprenant en outre :
un deuxième échangeur de chaleur présentant un côté entrée de chaleur et un côté sortie de chaleur ;
un deuxième circuit d'échange de chaleur raccordant par fluide le côté sortie de chaleur du deuxième échangeur de chaleur au réservoir (32) ;
un troisième circuit d'échange de chaleur raccordant par fluide le côté entrée de chaleur du deuxième échangeur de chaleur en boucle fermée ; et
une source de chauffage auxiliaire adaptée pour chauffer de l'eau dans le troisième circuit d'échange de chaleur.

12. La chaudière de la revendication 11, où la source de chauffage auxiliaire est une source de chauffage auxiliaire alimentée par l'énergie solaire.

13. Un chauffage central et un système d'eau chaude comprenant une chaudière semi-tubulaire électrique selon n'importe lesquelles des revendications 1 à 12, et un système de chauffage central circulatoire sur lequel se trouve au moins un radiateur.
